# EUROPEAN PATENT APPLICATION

(11) **EP 4 586 635 A1**
(43) Date of publication of application: **16.07.2025**
(21) Application number: 23881316.6
(22) Date of filing: 30.06.2023
(51) Int. Cl.: H04Q 11/00

(54) **CARRIER ALLOCATION METHOD AND APPARATUS IN OPTICAL COMMUNICATION NETWORK**

(30) Priority: 29.10.2022 CN 202211340687
(71) Applicant: Huawei Technologies Co., Ltd., Shenzhen, Guangdong 518129 (CN)
(72) Inventor: LI, Liangchuan, Shenzhen, Guangdong 518129 (CN); YE, Zhicheng, Shenzhen, Guangdong 518129 (CN); ZHANG, Kuo, Shenzhen, Guangdong 518129 (CN)
(74) Representative: Pfenning, Meinig & Partner mbB
(86) International application number: PCT/CN2023/105371
(87) International publication number: WO 2024/087728

(57) **Abstract**

A carrier allocation method and apparatus in an optical communication network that relate to the field of optical communication technologies are disclosed, to resolve a problem that link attenuation of an ONU does not match a frequency of a subcarrier occupied by the ONU. When link attenuation information of a network device belongs to a link attenuation range corresponding to a subcarrier, a carrier allocation device allocates a subcarrier to the network device based on the link attenuation information, so that a frequency of the subcarrier matches link attenuation of the network device. In this way, a problem that a high-frequency subcarrier is allocated to a network device having a high-attenuation link because link attenuation is not considered in a carrier allocation process is avoided, and this helps the subcarrier carry larger communication traffic per unit of time, and improves bandwidth utilization and a communication capability of the optical communication network.

## Description

This application claims priority to Chinese Patent Application No. 202211340687.4, filed with the China National Intellectual Property Administration on October 29, 2022 and entitled "CARRIER ALLOCATION METHOD AND APPARATUS IN OPTICAL COMMUNICATION NETWORK", which is incorporated herein by reference in its entirety.

### TECHNICAL FIELD

This application relates to the field of optical communication technologies, and in particular, to a carrier allocation method and apparatus in an optical communication network.

### BACKGROUND

A point to multi-point (Point to multi-point, P2MP) system includes: a plurality of optical network units (Optical Network Units, ONUs), an optical line terminal (Optical Line Terminal, OLT), and an optical distribution network (Optical Distribution Network, ODN). The OLT allocates, to each ONU, a subcarrier needed for signal transmission. Generally, the OLT randomly allocates different subcarriers to different ONUs to which users log in, to avoid mutual impact of signal transmission between the plurality of ONUs. However, link attenuation of different ONUs in the ODN is different, and mismatch between link attenuation and a subcarrier affects transmission performance of the subcarrier. In this case, a network delay is increased.

### SUMMARY

This application provides a carrier allocation method and apparatus in an optical communication network, to resolve a problem that link attenuation of an ONU does not match a frequency of a subcarrier occupied by the ONU.

According to a first aspect, an embodiment of this application provides a carrier allocation method in an optical communication network. The method is applied to the optical communication network. For example, the method is performed by a carrier allocation device, or an optical network device that supports carrier allocation, such as an OLT. The carrier allocation method provided in this embodiment includes: First, the carrier allocation device obtains first link attenuation information of a first network device; second, the carrier allocation device queries a specified insertion loss relationship for a link attenuation range to which the first link attenuation information belongs, to obtain a first subcarrier that matches the first link attenuation information; and finally, the carrier allocation device sends a first command to the first network device, where the first command instructs the first network device to access the optical communication network based on the first subcarrier. The insertion loss relationship indicates a link attenuation range corresponding to each subcarrier in a plurality of subcarriers supported by the carrier allocation device, and the plurality of subcarriers include the first subcarrier.

In this embodiment, when the link attenuation information of the network device belongs to the link attenuation range corresponding to the subcarrier, the carrier allocation device allocates the subcarrier to the network device based on the link attenuation information, so that a frequency of the subcarrier matches link attenuation of the network device. In this way, a problem that a high-frequency subcarrier is allocated to a network device having a high-attenuation link because link attenuation is not considered in a carrier allocation process is avoided, and this helps the subcarrier carry larger communication traffic per unit of time, and improves bandwidth utilization and a communication capability of the optical communication network.

Optionally, the carrier allocation method provided in this embodiment further includes: First, the carrier allocation device obtains second link attenuation information of a second network device; second, the carrier allocation device queries the insertion loss relationship for a link attenuation range to which the second link attenuation information belongs, to obtain a second subcarrier that matches the second link attenuation information; and finally, the carrier allocation device sends a second command to the second network device, where the second command instructs the second network device to access the optical communication network based on the second subcarrier.

For network devices whose link attenuation information belongs to different link attenuation ranges, the carrier allocation device allocates different subcarriers. This implements frequency division multiple access (Frequency Division Multiple Access, FDMA) of the plurality of network devices in the optical communication network based on different subcarriers, avoids a problem that different network devices preempt a same subcarrier resource, and helps improve the bandwidth utilization and the communication capability of the optical communication network.

In an example, the first link attenuation information is greater than the second link attenuation information, and a frequency corresponding to the first subcarrier is less than a frequency corresponding to the second subcarrier. In another example, the first link attenuation information is less than the second link attenuation information, and a frequency corresponding to the first subcarrier is greater than a frequency corresponding to the second subcarrier.

In the foregoing two examples, a network device having a high-attenuation link uses a low-frequency subcarrier, so that a large loss of information carried on the high-frequency subcarrier caused because the high-frequency subcarrier is for transmitting the information sent by the network device having a high-attenuation link is avoided, and information transmission security is improved. In addition, a network device having a low-attenuation link uses the high-frequency subcarrier. In this way, a loss amount of information from the network device in a communication process is reduced, so that the high-frequency subcarrier supports higher-capacity communication, and the bandwidth utilization and the communication capability of the optical communication network are improved.

It should be noted that, in the foregoing embodiment, the FDMA is described based on that two network devices use different subcarriers. However, in some optional cases, the plurality of subcarriers supported by the carrier allocation device may carry communication traffic needed by a larger quantity of network devices. This is not limited in this application.

Optionally, the carrier allocation method provided in this embodiment further includes: The carrier allocation device obtains third link attenuation information of a third network device; and the carrier allocation device queries the insertion loss relationship for a link attenuation range to which the third link attenuation information belongs, and if the third link attenuation information and the first link attenuation information belong to a same link attenuation range, the carrier allocation device sends a third command to the third network device. The third command instructs the third network device to access the optical communication network based on the first subcarrier, and a timeslot at which the first network device uses the first subcarrier is different from a timeslot at which the third network device uses the first subcarrier.

For network devices whose link attenuation information belongs to a same link attenuation range, the carrier allocation device allocates a same subcarrier, but timeslots at which the network devices use the subcarrier are different. This implements time division multiple access (Time Division Multiple Access, TDMA) of the plurality of network devices in the optical communication network based on different subcarriers, avoids a problem that different network devices preempt a subcarrier resource, and helps improve the bandwidth utilization and the communication capability of the optical communication network.

It should be noted that, in the foregoing embodiment, the TDMA is described based on that two network devices use a same subcarrier. However, in some optional cases, a same subcarrier may carry communication traffic needed by a larger quantity of network devices. This is not limited in this application.

Optionally, a process in which the carrier allocation device obtains the first link attenuation information of the first network device may include: The carrier allocation device receives reported power sent by the first network device, where the reported power includes transmit optical power of the first network device or receive optical power of the first network device; and the carrier allocation device determines the first link attenuation information based on the reported power and ranging information of the first network device.

For example, if the reported power is the transmit optical power of the first network device, the carrier allocation device may detect receive optical power received by the carrier allocation device from the first network device, and determine the first link attenuation information based on a power difference (the transmit optical power and the receive optical power) and the ranging information of the first network device. For another example, if the reported power is the receive optical power of the first network device, the carrier allocation device may detect power of light transmitted by the carrier allocation device to the first network device, and determine the first link attenuation information based on a power difference and the ranging information of the first network device. The foregoing two examples are merely possible implementations provided in this embodiment, and should not be understood as limitations on this application.

According to a second aspect, an embodiment of this application provides a carrier allocation apparatus in an optical communication network, where the carrier allocation apparatus is used in a carrier allocation device in the optical communication network, such as an OLT. The carrier allocation apparatus provided in this embodiment includes: an obtaining unit, a subcarrier determining unit, and a subcarrier allocation unit. The obtaining unit is configured to obtain first link attenuation information of a first network device. The subcarrier determining unit is configured to query a specified insertion loss relationship for a link attenuation range to which the first link attenuation information belongs, to obtain a first subcarrier that matches the first link attenuation information. The insertion loss relationship indicates a link attenuation range corresponding to each subcarrier in a plurality of subcarriers supported by the carrier allocation device, and the plurality of subcarriers include the first subcarrier. The subcarrier allocation unit is configured to send a first command to the first network device, where the first command instructs the first network device to access the optical communication network based on the first subcarrier.

Optionally, the obtaining unit is further configured to obtain second link attenuation information of a second network device. The subcarrier determining unit is further configured to query the insertion loss relationship for a link attenuation range to which the second link attenuation information belongs, to obtain a second subcarrier that matches the second link attenuation information. The subcarrier allocation unit is further configured to send a second command to the second network device, where the second command instructs the second network device to access the optical communication network based on the second subcarrier.

Optionally, the first link attenuation information is greater than the second link attenuation information, and a frequency corresponding to the first subcarrier is less than a frequency corresponding to the second subcarrier. Alternatively, the first link attenuation information is less than the second link attenuation information, and a frequency corresponding to the first subcarrier is greater than a frequency corresponding to the second subcarrier.

Optionally, the obtaining unit is further configured to obtain third link attenuation information of a third network device. The subcarrier determining unit is further configured to query the insertion loss relationship for a link attenuation range to which the third link attenuation information belongs, and if the third link attenuation information and the first link attenuation information belong to a same link attenuation range, the subcarrier allocation unit is further configured to send a third command to the third network device. The third command instructs the third network device to access the optical communication network based on the first subcarrier, and a timeslot at which the first network device uses the first subcarrier is different from a timeslot at which the third network device uses the first subcarrier.

Optionally, the obtaining unit is specifically configured to: receive reported power sent by the first network device, and determine the first link attenuation information based on the reported power and ranging information of the first network device. The reported power includes transmit optical power of the first network device or receive optical power of the first network device.

According to a third aspect, an embodiment of this application provides an optical communication system, including a carrier allocation device and at least one network device. First, the carrier allocation device obtains first link attenuation information of a first network device, where the first network device is any one of the at least one network device. Second, the carrier allocation device queries a specified insertion loss relationship for a link attenuation range to which the first link attenuation information belongs, to obtain a first subcarrier that matches the first link attenuation information, where the insertion loss relationship indicates a link attenuation range corresponding to each subcarrier in a plurality of subcarriers supported by the carrier allocation device. The plurality of subcarriers include the first subcarrier. Finally, the carrier allocation device sends a first command to the first network device, where the first command instructs the first network device to access the optical communication network based on the first subcarrier.

The optical communication system may be configured to implement operation steps of the method according to any optional embodiment of the first aspect. Details are not described again.

According to a fourth aspect, an embodiment of this application provides a communication device. The communication device includes a memory and a processor. The memory is configured to store a group of computer instructions. When executing the group of computer instructions, the processor performs operation steps of the method according to any optional embodiment of the first aspect. For example, the communication device is the foregoing carrier allocation device, or any network device, or the like.

According to a fifth aspect, an embodiment of this application provides a chip system. The chip system includes a memory and at least one processor. The memory is configured to store a group of computer instructions. When executing the group of computer instructions, the processor performs operation steps of the method according to any optional embodiment of the first aspect.

According to a sixth aspect, an embodiment of this application provides a computer-readable storage medium. The computer-readable storage medium includes computer software instructions. When the computer software instructions are run on a communication device, the communication device is enabled to perform operation steps of the method according to any one of the first aspect or the possible implementations of the first aspect.

According to a seventh aspect, an embodiment of this application provides a computer program product. When the computer program product runs on a communication device, the communication device is enabled to perform operation steps of the method according to any one of the first aspect or the possible implementations of the first aspect.

For beneficial effects of any one of the second aspect to the seventh aspect, refer to descriptions of the first aspect. Details are not described again. In this application, based on the implementations provided in the foregoing aspects, the implementations may be further combined to provide more implementations.

### BRIEF DESCRIPTION OF DRAWINGS

FIG. 1 is a diagram of a structure of an optical communication network;
FIG. 2 is a diagram of a structure of a PON;
FIG. 3 is a schematic flowchart 1 of a carrier allocation method according to an embodiment of this application;
FIG. 4 is a schematic flowchart 2 of a carrier allocation method according to an embodiment of this application;
FIG. 5 is a diagram 1 of allocating carriers to a plurality of ONUs according to an embodiment of this application;
FIG. 6 is a diagram 2 of allocating carriers to a plurality of ONUs according to an embodiment of this application;
FIG. 7 is a diagram of a structure of a carrier allocation apparatus according to an embodiment of this application; and
FIG. 8 is a diagram of a structure of a communication device according to an embodiment of this application.

### DESCRIPTION OF EMBODIMENTS

This application provides a carrier allocation method in an optical communication network, where the method is applied to the optical communication network. For example, the method is performed by a carrier allocation device. The method includes: The carrier allocation device queries, based on link attenuation information of each network device, a specified insertion loss relationship for a link attenuation range to which the link attenuation information belongs, to obtain a subcarrier that matches the link attenuation information; and the carrier allocation device allocates the subcarrier to each network device, so that the network device may access the optical communication network based on the subcarrier. The insertion loss relationship indicates a link attenuation range corresponding to each subcarrier in a plurality of subcarriers supported by the carrier allocation device. The carrier allocation device allocates the subcarrier to the network device based on the link attenuation information, so that a frequency of the subcarrier matches link attenuation of the network device. In this way, a problem that a high-frequency subcarrier is allocated to a network device having a high-attenuation link because link attenuation is not considered in a carrier allocation process is avoided, and this helps the subcarrier carry larger communication traffic per unit of time, and improves bandwidth utilization and a communication capability of the optical communication network.

For example, a network device having a high-attenuation link uses a low-frequency subcarrier, so that a large loss of information carried on the high-frequency subcarrier caused because the high-frequency subcarrier is for transmitting the information sent by the network device having a high-attenuation link is avoided, and information transmission security is improved. For another example, a network device having a low-attenuation link uses a high-frequency subcarrier. In this way, a loss amount of information from the network device in a communication process is reduced, so that the high-frequency subcarrier supports higher-capacity communication, and the bandwidth utilization and the communication capability of the network are improved.

For clear and brief description of the following embodiments, related technologies are briefly described first.

Subcarrier: Based on a feature of an electromagnetic wave, frequency bands that can be used for communication are very limited, and frequency bands that each communication system is approved to obtain are also limited. To serve more users, the communication system divides a total frequency band of the communication system into several sub-bands, and each sub-band is also referred to as one subcarrier, which determines a transmission rate of a modulation signal.

FDMA: Different frequency bands (subcarriers) are allocated to users with different addresses at the same time for use.

TDMA: Same frequency bands (subcarriers) are allocated to users with different addresses at different time for use.

Link attenuation: The link attenuation is also referred to as a link insertion loss, an optical power loss, optical link attenuation, a device loss, optical device attenuation, an insertion loss, or the like, and indicates a power difference between transmit optical power and receive optical power of different network devices. The link attenuation may be determined based on the power difference between network devices and ranging information of the network devices.

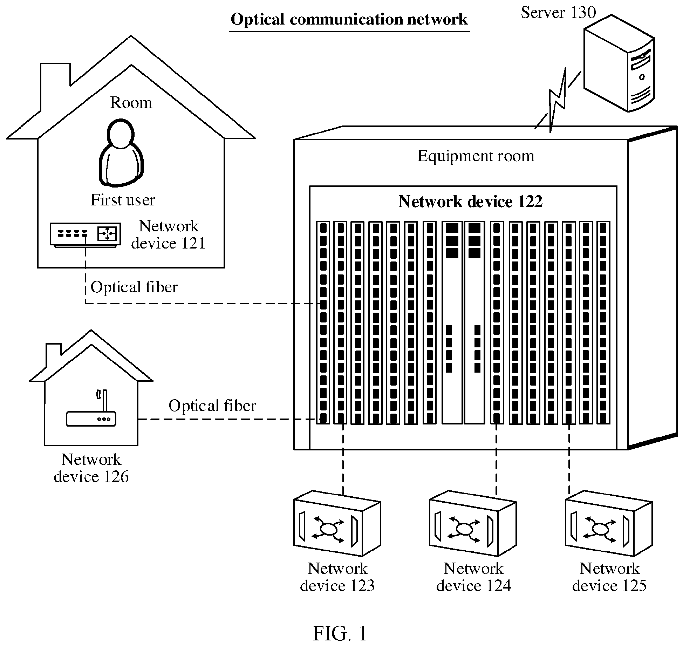

FIG. 1 is a diagram of a structure of an optical communication network according to this application. The optical communication network may also be referred to as an optical transmission network, an optical communication system, or the like. The optical communication network includes a plurality of network devices. One or more of the network devices are configured to be connected to a user terminal. For example, the terminal may be a mobile phone, a tablet computer, a personal telephone, a desktop computer, or the like.

A subcarrier allocation method provided in this application may be applied to the optical communication system (also referred to as the optical communication network). The optical communication system may be a point to multi-point (P2MP) communication system, for example, a passive optical network (passive optical network, PON) of an access network, a passive optical local area network (passive optical LAN, POL), an industrial optical network, an in-vehicle optical network, a metropolitan optical network, or an internet of things. Specifically, the PON may be an asynchronous transfer mode (asynchronous transfer mode, ATM) PON (ATM PON, APON), a broadband passive optical network (broadband PON, BPON), an Ethernet PON (ethernet PON, EPON), a gigabit-capable PON (gigabit-capable PON, GP ON), or the like. A type of the PON is not limited in this application.

For example, in a PON scenario, an optical transmitting apparatus (for example, a network device 121) may be located in a user home or a user corridor, and an optical receiving apparatus (for example, a network device 122) may be located in an equipment room of an operator. In a POL scenario, an optical transmitting apparatus and an optical receiving apparatus may be located in a campus (for example, an enterprise or a school).

In an industrial optical network scenario, the optical transmitting apparatus and the optical receiving apparatus may be located in an industrial manufacturing workshop. In an in-vehicle optical network scenario, the optical transmitting apparatus and the optical receiving apparatus may be disposed in a vehicle. For example, in the PON scenario, the network device 121 may be an optical network terminal (optical network terminal, ONT) or an ONU, and the network device 122 may be an OLT.

In the in-vehicle optical network scenario, the optical transmitting apparatus may be a vehicle interface unit (vehicle interface unit, VIU), and the optical receiving apparatus may be a mobile data center (MDC), a vehicle dynamic control (vehicle dynamic control, VDC), or a cockpit data center (cockpit data center, CDC). The technical solutions provided in this application may be further applicable to an optical backbone transmission network, data center optical transmission, short-range optical interconnection, wireless service fronthaul/backhaul, and the like. Specifically, the technical solutions provided in this application may be applied to the optical transmitting apparatuses and/or the optical receiving apparatuses corresponding to the foregoing different networks.

In a metropolitan optical network scenario, as shown in FIG. 1, the network device 122 may have a plurality of interfaces, and each interface communicates with a plurality of network devices via an optical fiber or another transmission medium. The network device 122 is an OLT deployed in an equipment room. When the OLT is configured to implement a function of the optical receiving apparatus, the OLT may be configured to aggregate services of the plurality of network devices. The plurality of network devices may be the network device 121, a network device 126, and the like in FIG. 1. In addition, when the OLT is configured to implement a function of the optical transmitting apparatus, the OLT may be configured to forward service packets of a plurality of network devices to a network device connected to a terminal, and the like. For example, the plurality of network devices are a network device 123 to a network device 125. In some cases, the network device 122 and the network device 123 to the network device 125 may be access networks in the metropolitan optical network. Any one of the network device 123 to the network device 125 may further perform optical communication with another network device in the optical communication network.

The network device may be a routing and forwarding device. For example, the routing and forwarding device may be a router, a switch, or the like, which may be a core router (core router, CR), an edge router (provider edge, PE), or the like. The network device may alternatively be a broadband network gateway (broadband network gateway, BNG), a broadband remote access server (Broadband Remote Access Server, BRAS), or the like. The terminal can access a server via the network device. For example, in a room shown in FIG. 1, a first user may establish, by using a wireless broadband (wireless-fidelity, Wi-Fi) technology, a communication connection to the network device 121 via a terminal 111, so that the terminal 111 sends a data packet to a server 130.

The server 130 may be an application server or an authentication and authorization server. The server 130 may provide a video service, a game service, a message service, a music service, an authentication and authorization service, and the like. In an example, functions of a plurality of services may be integrated into the server 130. For example, the game service and the music service may be deployed on the server 130. In another example, functions of some services may be integrated into the server 130. For example, a part of the game service and a part of the video service are deployed on the server 130. The server 130 may further provide a plurality of virtual machines by using a virtualization technology, and the virtual machines provide various services. A deployment form of the service is not limited in embodiments of this application.

The network device is connected to the server 130 in a wireless or wired manner. FIG. 1 is merely a diagram. The optical communication network may further include another device that is not shown in FIG. 1. Quantities of terminal devices, network devices, and servers included in the optical communication network are not limited in embodiments of this application.

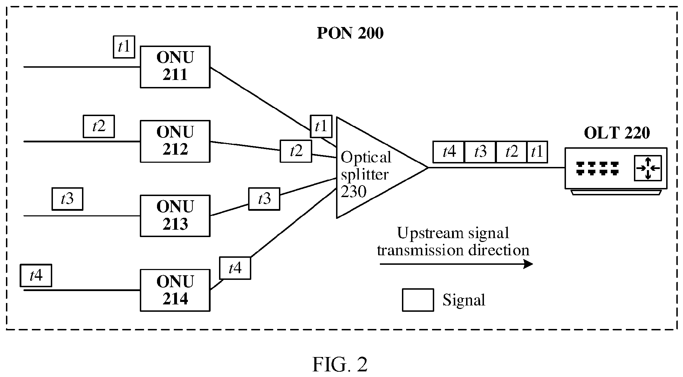

A PON is used as an example for description. FIG. 2 is a diagram of a structure of a PON according to this application. A plurality of ONUs (for example, an ONU 211 to an ONU 214 in FIG. 2) communicate with an OLT 220 via an optical splitter 230.

For example, signals respectively transmitted upstream by the ONU 211 to the ONU 214 to the OLT 220 are a signal t1, a signal t2, a signal t3, and a signal t4. After receiving the signal sent by the ONU, the OLT 220 performs a service or an operation indicated by the signal, for example, performs ONU registration, performs ranging on the ONU, and communicates with the ONU.

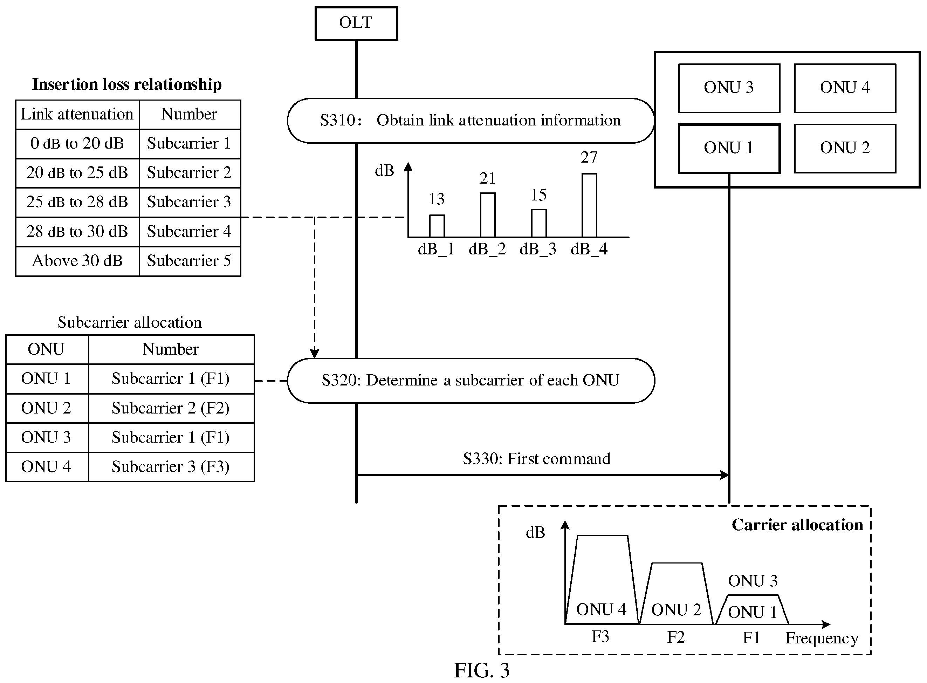

Based on the PON shown in FIG. 2, the following describes in detail a carrier allocation method provided in this application. FIG. 3 is a schematic flowchart 1 of a carrier allocation method according to this application. The OLT may also be referred to as a carrier allocation device in the PON. An ONU 1 to an ONU 4 are network devices that access the PON. For example, the ONU 1 may be referred to as a first network device, the ONU 2 may be referred to as a second network device, and the ONU 3 may be referred to as a third network device.

As shown in FIG. 3, the carrier allocation method provided in this embodiment includes the following steps S310 to S330.

S310: The OLT obtains link attenuation information of a plurality of ONUs.

The link attenuation information indicates an optical power difference between the OLT and the ONU.

Different ONUs has different link attenuation information, and each ONU corresponds to one piece of link attenuation information. For example, the ONU 1 corresponds to first link attenuation information (dB_1), the ONU 2 corresponds to second link attenuation information (dB_2), the ONU 3 corresponds to third link attenuation information (dB_3), and the ONU 4 corresponds to fourth link attenuation information (dB_4). As shown in FIG. 3, dB_1=13 dB, dB_2=21 dB, dB_3=15 dB, and dB_4=27 dB.

Herein, the ONU 1 is used as an example to describe a process in which the OLT determines the first link attenuation information. The OLT may determine the link attenuation information of the ONU 1 based on reported power sent by the ONU 1 and ranging information of the ONU 1. For example, if the reported power is transmitting optical power of the ONU 1, the OLT may detect receive optical power received by the OLT from the ONU 1, and determine dB_1 based on a power difference (the transmit optical power and the receive optical power) and the ranging information of the ONU 1. For another example, if the reported power is receiving optical power of the ONU 1, the OLT may detect power of light transmitted by the OLT to the ONU 1, and determine dB_1 based on a power difference and the ranging information of the ONU 1.

For example, the OLT may actively send a power reporting instruction to the ONU 1, and the ONU 1 sends the reported power to the OLT in response to the power reporting instruction. Alternatively, the ONU 1 sends the reported power to the OLT based on a set periodicity. This is not limited in this application.

The foregoing two examples are merely possible implementations provided in this embodiment, and should not be understood as limitations on this application.

S320: The OLT queries a specified insertion loss relationship for a link attenuation range to which the link attenuation information corresponding to the ONU belongs, to obtain a subcarrier that matches each piece of link attenuation information.

The insertion loss relationship indicates a link attenuation range corresponding to each subcarrier in a plurality of subcarriers supported by the OLT. The plurality of subcarriers may include a subcarrier 1 to a subcarrier n, where n is a positive integer greater than 1. For example, n=5.

For example, as shown in FIG. 3, a link attenuation range corresponding to the subcarrier 1 (a first subcarrier) is 0 dB to 20 dB, a link attenuation range corresponding to the subcarrier 2 (a second subcarrier) is 20 dB to 25 dB, a link attenuation range corresponding to the subcarrier 3 (a third subcarrier) is 25 dB to 28 dB, a link attenuation range corresponding to the subcarrier 4 (a fourth subcarrier) is 28 dB to 30 dB, and a link attenuation range corresponding to the subcarrier 5 (a fifth subcarrier) is above 30 dB.

In this embodiment, an example in which the link attenuation range is in a right inclusion relationship is used for description. For example, 20 dB to 25 dB means greater than 20 dB and less than or equal to 25 dB. In addition, in some examples, the link attenuation range may alternatively be in a left inclusion relationship. For example, 20 dB to 25 dB means greater than or equal to 20 dB and less than 25 dB. This is not limited in this application.

For content of subcarrier determining shown in FIG. 3, the following separately provides possible implementations in which the OLT determines subcarriers for the four ONUs.

For example, the ONU 1 is used as an example. The first link attenuation information (dB_1) of the ONU 1 obtained by the OLT is 13 dB, which belongs to the link attenuation range corresponding to the subcarrier 1 (0 dB to 20 dB). In this case, it is determined that a subcarrier to be used by the ONU 1 is the subcarrier 1 (F1). For another example, the ONU 2 is used as an example. The second link attenuation information (dB_2) of the ONU 2 obtained by the OLT is 21 dB, which belongs to the link attenuation range corresponding to the subcarrier 2 (20 dB to 25 dB). In this case, it is determined that a subcarrier to be used by the ONU 2 is the subcarrier 2 (F2). For still another example, the ONU 3 is used as an example. The third link attenuation information (dB_3) of the ONU 3 obtained by the OLT is 15 dB, which belongs to the link attenuation range corresponding to the subcarrier 1 (0 dB to 20 dB). In this case, it is determined that a subcarrier to be used by the ONU 3 is the subcarrier 1 (F1). In addition, the ONU 4 is used as an example. The fourth link attenuation information (dB_4) of the ONU 4 obtained by the OLT is 27 dB, which belongs to the link attenuation range corresponding to the subcarrier 3 (25 dB to 28 dB). In this case, it is determined that a subcarrier to be used by the ONU 4 is the subcarrier 3 (F3).

In the foregoing embodiment, the first link attenuation information (dB_1) is less than the second link attenuation information (dB_2), and a frequency corresponding to the first subcarrier (the subcarrier 1) is greater than a frequency corresponding to the second subcarrier (the subcarrier 2).

A network device having a low-attenuation link uses a high-frequency subcarrier, and a loss amount of information from the network device in a communication process is reduced, so that the high-frequency subcarrier supports higher-capacity communication. In this way, bandwidth utilization and a communication capability of the optical communication network are improved.

The foregoing link attenuation information is merely an example provided in this embodiment, and should not be understood as a limitation on this application. For example, in some other examples, if the first link attenuation information is greater than the second link attenuation information, and a frequency corresponding to the first subcarrier is less than a frequency corresponding to the second subcarrier, a network device having a high-attenuation link uses a low-frequency subcarrier, so that a large loss of information carried on a high-frequency subcarrier caused because the high-frequency subcarrier is for transmitting the information sent by the network device having a high-attenuation link is avoided, and information transmission security is improved.

S330: The OLT sends a first command to the ONU 1.

The first command instructs the ONU 1 to access the optical communication network based on the first subcarrier (the subcarrier 1).

An optional example is provided herein for a case in which the ONU 1 accesses the optical communication network based on the subcarrier 1. The ONU 1 adjusts a frequency of a laser in the ONU 1 to a frequency position corresponding to the subcarrier 1, and sends a service packet to the OLT based on the frequency position, where the service packet indicates that the OLT or another device in the optical communication network performs a service processing process and the like. In this way, optical communication between the ONU 1 and the OLT is implemented, in other words, the ONU 1 accesses the optical communication network based on the subcarrier 1.

In this embodiment, when the link attenuation information of the ONU belongs to the link attenuation range corresponding to the subcarrier, the OLT allocates the subcarrier to the ONU based on the link attenuation information, so that the frequency of the subcarrier matches link attenuation of the ONU. In this way, a problem that a high-frequency subcarrier is allocated to an ONU having a high-attenuation link because link attenuation is not considered in a carrier allocation process is avoided, and this helps the subcarrier carry larger communication traffic per unit of time, and improves the bandwidth utilization and the communication capability of the optical communication network.

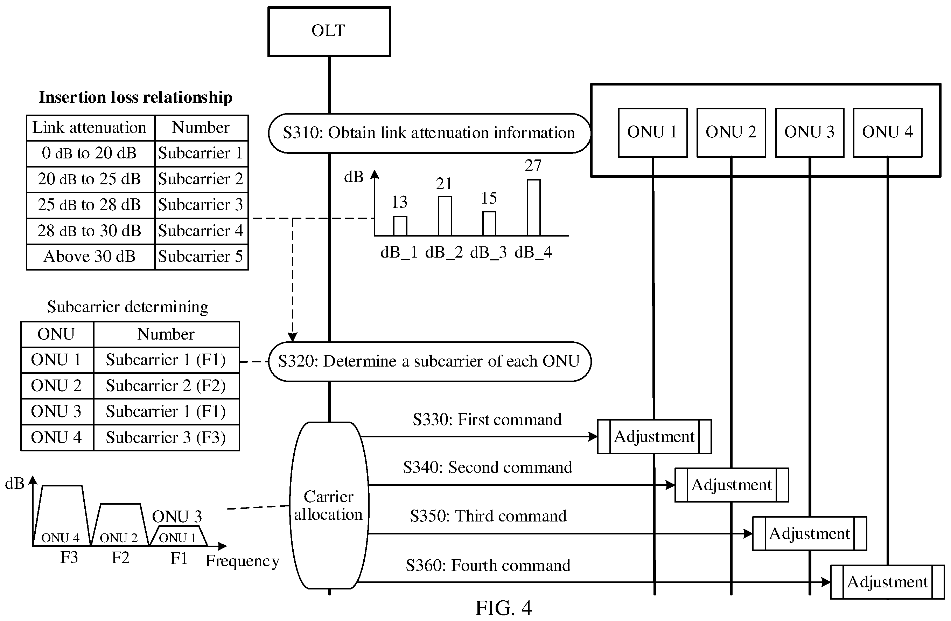

It should be noted that, after determining a subcarrier of each ONU, the OLT may further send a command to another ONU, so that the another ONU accesses the optical communication network based on a subcarrier allocated to the another ONU. FIG. 4 is a schematic flowchart 2 of a carrier allocation method according to this application. In addition to S310 to S330 shown in FIG. 3, the method further includes steps S340 to S360.

S340: An OLT sends a second command to an ONU 2.

The second command instructs the ONU 2 to access an optical communication network based on a second subcarrier (a subcarrier 2). For example, the ONU 2 adjusts a frequency of a laser in the ONU 2 to a frequency position corresponding to the subcarrier 2, to implement optical communication between the ONU 2 and the OLT.

An ONU 1 and the ONU 2 are used as examples. For ONUs whose link attenuation information belongs to different link attenuation ranges, the OLT allocates different subcarriers. This implements FDMA of the plurality of ONUs in the optical communication network based on different subcarriers, avoids a problem that different ONUs preempt a same subcarrier resource, and helps improve bandwidth utilization and a communication capability of the optical communication network.

It should be noted that, in the foregoing embodiment, the FDMA is described based on that two ONUs use different subcarriers. However, in some optional cases, a plurality of subcarriers supported by the OLT may carry communication traffic needed by a larger quantity of ONUs (for example, S360 in FIG. 4). This is not limited in this application.

S350: The OLT sends a third command to an ONU 3.

The third command instructs the ONU 3 to access the optical communication network based on a first subcarrier, and a timeslot at which the ONU 1 uses the first subcarrier is different from a timeslot at which the ONU 3 uses the first subcarrier. For example, the ONU 3 adjusts a frequency of a laser in the ONU 3 to a frequency position corresponding to a subcarrier 1, to implement optical communication between the ONU 3 and the OLT.

In this embodiment, a plurality of users may share one subcarrier in a TDMA manner. In this case, the OLT needs to perform grouping on the ONUs based on link attenuation. As shown in a subcarrier determining process in FIG. 4, the ONU 1 and the ONU 3 belong to a same group (0 dB to 20 dB). Optionally, the group may further include another ONU. All ONUs in the group share one subcarrier, but timeslots at which the ONUs use the subcarrier are different.

The link attenuation ranges and grouping shown in FIG. 3 and FIG. 4 are merely examples provided in embodiments. The link attenuation grouping may alternatively be user-defined or another grouping. For example, the OLT groups an ONU whose attenuation ranges from 25 dB to 30 dB into a first group, an ONU whose attenuation ranges from 20 dB to 25 dB into a second group, and an ONU whose attenuation ranges from 15 dB to 20 dB into a third group, and sequentially performs subcarrier allocation in order from a low frequency to a high frequency.

The ONU 1 and the ONU 3 are used as examples. For ONUs whose link attenuation information belongs to a same link attenuation range, the OLT allocates a same subcarrier, but timeslots at which the ONUs use the subcarrier are different. This implements TDMA of the plurality of ONUs in the optical communication network based on different subcarriers, avoids a problem that different ONUs preempt a subcarrier resource at the same time, and helps improve the bandwidth utilization and the communication capability of the optical communication network.

S360: The OLT sends a fourth command to an ONU 4.

The fourth command instructs the ONU 4 to access the optical communication network based on a third subcarrier (a subcarrier 3). For example, the ONU 4 adjusts a frequency of a laser in the ONU 4 to a frequency position corresponding to the subcarrier 3, to implement optical communication between the ONU 4 and the OLT.

Optionally, the first command to the fourth command may be wavelength tuning commands. The ONU may adjust the frequency (or a wavelength) of the laser based on the wavelength tuning command.

S310 to S340 describe the FDMA by using two ONUs as an example. With reference to S360, more implementations for implementing the FDMA are provided in this embodiment. As shown in content in FIG. 4, when the OLT is connected to more ONUs, the OLT may allocate different subcarriers to different ONUs based on different link attenuation information of the plurality of ONUs. For example, a user (ONU) having large link attenuation is assigned to a low frequency area (low-frequency subcarrier), and a user (ONU) having small link attenuation is assigned to a high frequency area (high-frequency subcarrier). In this way, a problem that a performance difference between different users and impact on a network capacity of the optical communication network caused because attenuation of different users may differ greatly when the plurality of users use a same subcarrier is avoided.

The foregoing embodiment is described by using an example in which the link attenuation information is determined based on dB (decibel). However, in some possible examples, the link attenuation information may alternatively be represented by using a device response of a receiver in the OLT, and the device response of the receiver may be expressed as optical power. A larger dB indicates a smaller device response of the receiver.

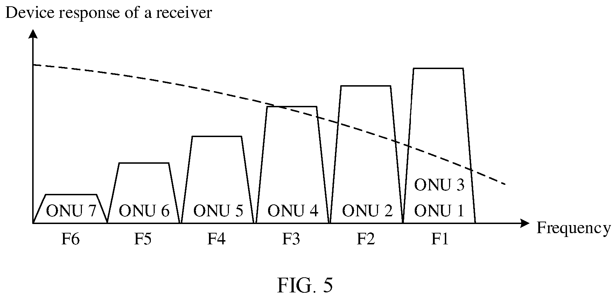

FIG. 5 is a diagram 1 of allocating carriers to a plurality of ONUs according to this application. The plurality of ONUs include an ONU 1 to an ONU 7. When initial optical power of optical signals transmitted by the plurality of ONUs is consistent, an OLT allocates a subcarrier to each ONU based on optical power of the ONU received by a transmitter in the OLT, as shown in Table 1.

**Table 1**

| ONU | Number |
|---|---|
| ONU 1 and ONU 3 | Subcarrier 1 (F1) |
| ONU 2 | Subcarrier 2 (F2) |
| ONU 4 | Subcarrier 3 (F3) |
| ONU 5 | Subcarrier 4 (F4) |
| ONU 6 | Subcarrier 5 (F5) |
| ONU 7 | Subcarrier 6 (F6) |

In addition, the foregoing dB and the optical power are described based on that the link attenuation information of the ONU belongs to a range. However, in some optional cases, when the plurality of ONUs do not use TDMA, each user may alternatively exclusively use one subcarrier. Therefore, the users only need to be sorted based on the link attenuation. For four ONUs and four subcarriers from a high frequency to a low frequency: F1>F2>F3>F4. The following table 2 provides a possible allocation manner.

**Table 2**

| ONU | Link attenuation (dB) | Number |
|---|---|---|
| ONU 1 | 20 dB | Subcarrier 3 (F3) |
| ONU 2 | 15 dB | Subcarrier 1 (F1) |
| ONU 3 | 18 dB | Subcarrier 2 (F2) |
| ONU 4 | 23 dB | Subcarrier 4 (F4) |

For the four subcarriers and the four ONU users, ODN attenuation corresponding to the ONU 1 to the ONU 4 is 20 dB, 15 dB, 18 dB, and 23 dB respectively. Therefore, subcarriers corresponding to the ONU 4, the ONU 1, the ONU 3, and the ONU 2 are sequentially distributed from a low frequency to a high frequency.

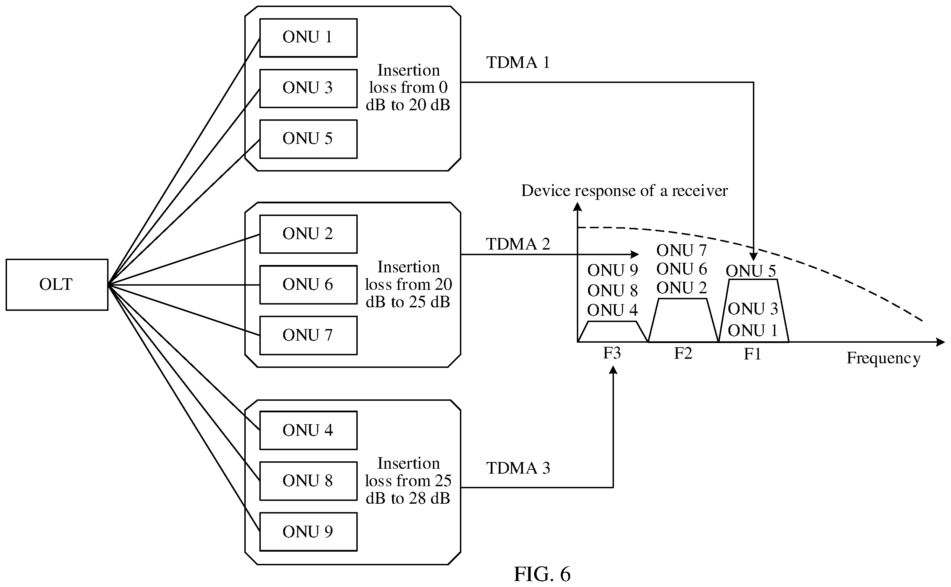

An example is provided with reference to the foregoing FDMA and TDMA carrier allocation scenarios. FIG. 6 is a diagram 2 of allocating carriers to a plurality of ONUs according to this application. The plurality of ONUs include an ONU 1 to an ONU 9. An OLT needs to perform grouping on the ONUs based on link attenuation (insertion losses) of ONUs. For example, the OLT groups ONUs whose insertion losses range from 0 dB to 20 dB into a first group (TDMA 1): the ONU 1, the ONU 3, and the ONU 5; the OLT groups ONUs whose insertion losses range from 20 dB to 25 dB into a second group (TDMA 2): the ONU 2, the ONU 6, and the ONU 7; and the OLT groups ONUs whose insertion losses range from 25 dB to 28 dB into a third group (TDMA 3): the ONU 4, the ONU 8, and the ONU 9. In these groups, a plurality of ONUs (with similar link attenuation) in the same group may share a same subcarrier in a TDMA manner, and timeslots at which different ONUs use the subcarrier are different. This implements TDMA, and improves bandwidth utilization and a communication capability of a network.

Different groups use different subcarriers. Link attenuation of each group of ONUs in the TDMA 1 to the TDMA3 gradually increases, and subcarriers are sequentially allocated in order from a high frequency to a low frequency. A network device having a low-attenuation link uses a high-frequency subcarrier. In this way, a loss amount of information from the network device in a communication process is reduced, so that the high-frequency subcarrier supports higher-capacity communication, and the bandwidth utilization and the communication capability of the optical communication network are further improved.

It may be understood that, to implement functions in the foregoing embodiments, the network device includes a corresponding hardware structure and/or software module for performing each function. A person skilled in the art should be easily aware that, in this application, units and method steps described in examples with reference to embodiments disclosed in this application can be implemented in a form of hardware or a combination of hardware and computer software. Whether a function is performed by hardware or hardware driven by computer software depends on particular application scenarios and design constraint conditions of the technical solutions.

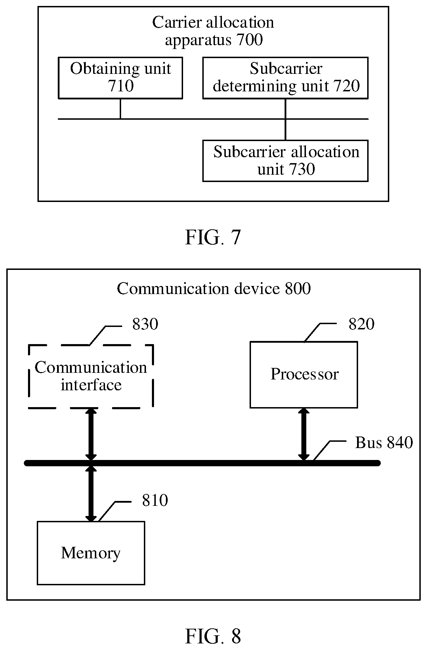

The foregoing describes in detail the carrier allocation method provided in this embodiment with reference to FIG. 3 to FIG. 6. The following describes a carrier allocation apparatus provided in this embodiment with reference to FIG. 7.

FIG. 7 is a diagram of a structure of a carrier allocation apparatus according to this application. The carrier allocation apparatus may be configured to implement the functions of the OLT in the foregoing method embodiments, and therefore can also implement beneficial effects of the foregoing method embodiments. In this embodiment, the carrier allocation apparatus may be the OLT 220 shown in FIG. 2, or the OLT in any example, or may be a module (for example, a chip) used in the OLT.

As shown in FIG. 7, the carrier allocation apparatus 700 includes: an obtaining unit 710, a subcarrier determining unit 720, and a subcarrier allocation unit 730. The carrier allocation apparatus 700 is configured to implement the functions of the OLT in the foregoing method embodiments. The obtaining unit 710 is configured to obtain first link attenuation information of a first network device. The subcarrier determining unit 720 is configured to query a specified insertion loss relationship for a link attenuation range to which the first link attenuation information belongs, to obtain a first subcarrier that matches the first link attenuation information. The insertion loss relationship indicates a link attenuation range corresponding to each subcarrier in a plurality of subcarriers supported by a carrier allocation device, and the plurality of subcarriers include the first subcarrier. The subcarrier allocation unit 730 is configured to send a first command to the first network device, where the first command instructs the first network device to access an optical communication network based on the first subcarrier.

The carrier allocation apparatus 700 may further include a process management module, a protocol module, a driver module, and the like. The process management module is configured to manage a running process. The protocol module is configured to implement protocol conversion. The driver module is configured to implement conversion between software and hardware.

For more detailed descriptions of the obtaining unit 710, the subcarrier determining unit 720, and the subcarrier allocation unit 730, directly refer to related descriptions of the OLT in the method embodiments shown in the accompanying drawings. Details are not described herein again.

When the carrier allocation apparatus implements, by using software, the carrier allocation method shown in any one of the accompanying drawings, the carrier allocation apparatus and each unit thereof may alternatively be software modules. A processor invokes the software module to implement the carrier allocation method. The processor may be a central processing unit (central processing unit, CPU), a neural processing unit (neural processing unit, NPU), a graphics processing unit (graphics processing unit, GPU), an application-specific integrated circuit (application-specific integrated circuit, ASIC), or a programmable logic device (programmable logic device, PLD). The PLD may be a complex programmable logic device (complex programmable logic device, CPLD), a field programmable gate array (field programmable gate array, FPGA), or a generic array logic (generic array logic, GAL), or may be another general-purpose processor, a transistor logic device, a hardware component, or any combination thereof. The general-purpose processor may be a microprocessor or any regular processor or the like.

For more detailed descriptions of the carrier allocation apparatus, refer to related descriptions in embodiments shown in the accompanying drawings. Details are not described herein again. It may be understood that the carrier allocation apparatus shown in the accompanying drawings is merely an example provided in this embodiment. Based on different subcarriers that can be supported by the carrier allocation apparatus, the carrier allocation apparatus may include more or fewer units. This is not limited in this application.

When the carrier allocation apparatus is implemented by using hardware, the hardware may be implemented by using a processor or a chip. The chip includes an interface circuit and a control circuit. The interface circuit is configured to: receive data from another device other than the processor and transmit the data to the control circuit, or send data from the control circuit to another device other than the processor.

The control circuit and the interface circuit are configured to implement, by using a logic circuit or by executing code instructions, the method according to any one of the possible implementations of the foregoing embodiments. For beneficial effects, refer to the descriptions of any aspect of foregoing embodiments. Details are not described herein again.

In addition, the carrier allocation apparatus 700 shown in FIG. 7 may alternatively be implemented via a communication device. As shown in FIG. 8, FIG. 8 is a diagram of a structure of a communication device according to this application. The communication device 800 includes a memory 810 and at least one processor 820. The processor 820 may implement the carrier allocation method provided in the foregoing embodiments. The memory 810 is configured to store software instructions corresponding to the carrier allocation method. In an optional implementation, in a hardware implementation, the communication device 800 may be a chip or a chip system in which one or more processors 820 are packaged. For example, when the communication device 800 is configured to implement the method steps in the foregoing embodiments, the processor 820 included in the communication device 800 performs the steps in the foregoing methods and possible substeps of the steps. In an optional case, the communication device 800 may further include a communication interface 830, and the communication interface 830 may be configured to receive and send data. For example, the communication interface 830 is configured to receive a carrier allocation signal, send a carrier allocation signal, or the like. The communication interface 830 may be implemented by using an interface circuit included in the communication device 800.

In this embodiment of this application, the communication interface 830, the processor 820, and the memory 810 may be connected through a bus 840. The bus 840 may be classified into an address bus, a data bus, a control bus, or the like. The bus 840 may be a peripheral component interconnect express (Peripheral Component Interconnect Express, PCIe) bus, an extended industry standard architecture (extended industry standard architecture, EISA) bus, a unified bus (unified bus, Ubus or UB), a compute express link (compute express link, CXL), a cache coherent interconnect for accelerators (cache coherent interconnect for accelerators, CCIX), or the like.

It should be noted that the communication device 800 may further perform functions of the carrier allocation apparatus 700 shown in FIG. 7. Details are not described herein again. The communication device 800 provided in this embodiment may be an OLT, or another communication device having a carrier allocation function. This is not limited in this application.

The method steps in embodiments of this application may alternatively be implemented by a processor executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may alternatively be a component of the processor. The processor and the storage medium may be disposed in an ASIC. In addition, the ASIC may be located in a network device or a terminal device. Certainly, the processor and the storage medium may alternatively exist as discrete components in the network device or the terminal device.

This application further provides a chip system. The chip system includes a processor, configured to implement the functions of the OLT in the foregoing method. In a possible design, the chip system further includes a memory, configured to store program instructions and/or data. The chip system may include a chip, or may include a chip and another discrete device.

All or a part of the foregoing embodiments may be implemented by using software, hardware, firmware, or any combination thereof. When the software is used to implement embodiments, all or a part of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc (digital video disc, DVD); or may be a semiconductor medium, for example, a solid state drive (solid state drive, SSD).

The foregoing descriptions are merely specific implementations of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

1. A carrier allocation method in an optical communication network, wherein the method is performed by a carrier allocation device, and the method comprises:
obtaining first link attenuation information of a first network device;
querying a specified insertion loss relationship for a link attenuation range to which the first link attenuation information belongs, to obtain a first subcarrier that matches the first link attenuation information, wherein the insertion loss relationship indicates a link attenuation range corresponding to each subcarrier in a plurality of subcarriers supported by the carrier allocation device, and the plurality of subcarriers comprise the first subcarrier; and
sending a first command to the first network device, wherein the first command instructs the first network device to access the optical communication network based on the first subcarrier.

2. The method according to claim 1, wherein the method further comprises:
obtaining second link attenuation information of a second network device;
querying the insertion loss relationship for a link attenuation range to which the second link attenuation information belongs, to obtain a second subcarrier that matches the second link attenuation information; and
sending a second command to the second network device, wherein the second command instructs the second network device to access the optical communication network based on the second subcarrier.

3. The method according to claim 2, wherein
the first link attenuation information is greater than the second link attenuation information, and a frequency corresponding to the first subcarrier is less than a frequency corresponding to the second subcarrier; or
the first link attenuation information is less than the second link attenuation information, and a frequency corresponding to the first subcarrier is greater than a frequency corresponding to the second subcarrier.

4. The method according to any one of claims 1 to 3, wherein the method further comprises:
obtaining third link attenuation information of a third network device; and
querying the insertion loss relationship for a link attenuation range to which the third link attenuation information belongs, and if the third link attenuation information and the first link attenuation information belong to a same link attenuation range, sending a third command to the third network device, wherein the third command instructs the third network device to access the optical communication network based on the first subcarrier, and a timeslot at which the first network device uses the first subcarrier is different from a timeslot at which the third network device uses the first subcarrier.

5. The method according to any one of claims 1 to 4, wherein the obtaining first link attenuation information of a first network device comprises:
receiving reported power sent by the first network device, wherein the reported power comprises transmit optical power of the first network device or receive optical power of the first network device; and
determining the first link attenuation information based on the reported power and ranging information of the first network device.

6. A carrier allocation apparatus in an optical communication network, wherein the apparatus is used in a carrier allocation device, and the apparatus comprises:
an obtaining unit, configured to obtain first link attenuation information of a first network device;
a subcarrier determining unit, configured to query a specified insertion loss relationship for a link attenuation range to which the first link attenuation information belongs, to obtain a first subcarrier that matches the first link attenuation information, wherein the insertion loss relationship indicates a link attenuation range corresponding to each subcarrier in a plurality of subcarriers supported by the carrier allocation device, and the plurality of subcarriers comprise the first subcarrier; and
a subcarrier allocation unit, configured to send a first command to the first network device, wherein the first command instructs the first network device to access the optical communication network based on the first subcarrier.

7. The apparatus according to claim 6, wherein
the obtaining unit is further configured to obtain second link attenuation information of a second network device;
the subcarrier determining unit is further configured to query the insertion loss relationship for a link attenuation range to which the second link attenuation information belongs, to obtain a second subcarrier that matches the second link attenuation information; and
the subcarrier allocation unit is further configured to send a second command to the second network device, wherein the second command instructs the second network device to access the optical communication network based on the second subcarrier.

8. The apparatus according to claim 7, wherein
the first link attenuation information is greater than the second link attenuation information, and a frequency corresponding to the first subcarrier is less than a frequency corresponding to the second subcarrier; or
the first link attenuation information is less than the second link attenuation information, and a frequency corresponding to the first subcarrier is greater than a frequency corresponding to the second subcarrier.

9. The apparatus according to any one of claims 6 to 8, wherein
the obtaining unit is further configured to obtain third link attenuation information of a third network device; and
the subcarrier determining unit is further configured to query the insertion loss relationship for a link attenuation range to which the third link attenuation information belongs, and if the third link attenuation information and the first link attenuation information belong to a same link attenuation range, the subcarrier allocation unit is further configured to send a third command to the third network device, wherein
the third command instructs the third network device to access the optical communication network based on the first subcarrier, and a timeslot at which the first network device uses the first subcarrier is different from a timeslot at which the third network device uses the first subcarrier.

10. The apparatus according to any one of claims 6 to 9, wherein the obtaining unit is specifically configured to: receive reported power sent by the first network device; and determine the first link attenuation information based on the reported power and ranging information of the first network device, wherein the reported power comprises transmit optical power of the first network device or receive optical power of the first network device.

11. An optical communication system, comprising a carrier allocation device and at least one network device, wherein
the carrier allocation device obtains first link attenuation information of a first network device, wherein the first network device is any one of the at least one network device;
the carrier allocation device queries a specified insertion loss relationship for a link attenuation range to which the first link attenuation information belongs, to obtain a first subcarrier that matches the first link attenuation information, wherein the insertion loss relationship indicates a link attenuation range corresponding to each subcarrier in a plurality of subcarriers supported by the carrier allocation device, and the plurality of subcarriers comprise the first subcarrier; and
the carrier allocation device sends a first command to the first network device, wherein the first command instructs the first network device to access the optical communication network based on the first subcarrier.

12. A communication device, comprising a memory and a processor, wherein the memory is configured to store a group of computer instructions, and when executing the group of computer instructions, the processor performs the method according to any one of claims 1 to 5.

13. A chip system, wherein the chip system comprises a memory and at least one processor, the memory is configured to store a group of computer instructions, and when executing the group of computer instructions, the processor performs the method according to any one of claims 1 to 5.

14. A computer-readable storage medium, comprising computer software instructions, wherein when the computer software instructions are run in a communication device, the communication device performs the method according to any one of claims 1 to 5.
